Europäisches Patentamt

European Patent Office

Office européen des brevets

(11) Publication number: **0 246 113**
**A2**

# EUROPEAN PATENT APPLICATION

(21) Application number: **87304348.3**

(22) Date of filing: **15.05.87**

(51) Int. Cl.⁴: **E 04 B 1/66**
**F 16 J 15/00**

(30) Priority: **15.05.86 DE 3616423**
**31.03.87 DE 3710755**

(43) Date of publication of application:
**19.11.87 Bulletin 87/47**

(84) Designated Contracting States:
**AT BE CH DE ES FR GB IT LI NL SE**

(71) Applicant: **Walter Rose GmbH & Co. KG**
**Lütkenheider Strasse 2**
**D-5800 Hagen 1 (DE)**

(72) Inventor: **Fremgen, Dieter**
**Hans-Boeckler-Strasse 46**
**D-5603 Wuelfrath (DE)**

**Reitmeyer, Georg**
**Echelnteichweg 59**
**D-5860 Iserlohn (DE)**

**Frewer, Raimund**
**Alter Dortmunder Weg 40**
**D-5860 Schwerte (DE)**

(74) Representative: **Patentanwälte Meinke und Dabringhaus**
**Dipl.-Ing. J. Meinke Dipl.-Ing. W. Dabringhaus**
**Westenhellweg 67**
**D-4600 Dortmund 1 (DE)**

(54) Device, especially for sealing between duct walls and cables.

(57) In a device for sealing the annular space between an elongate opening and an elongate body of smaller cross-section entering that opening, especially for sealing the space between duct walls and entering cable conduits, a solution is provided which uses sealing devices suitable for the re-equipment of already existing systems while achieving an especially high sealing action. This is achieved as a result of the device (5) consisting of a push-in body (7), which is provided with a longitudinal slit, for engaging in the cylindrical opening (2) and for encompassing the cylindrical body (3), and of a divided sealing ring (8) at its outer peripheral region which engages in the cylindrical opening (2) and a divided expanding ring (9) for expanding the sealing ring (8).

Fig.1

**Description**

Device, especially for sealing between duct walls and cables

The invention relates to a device for sealing an annular space between an elongate opening and an elongate substrate of smaller cross-section entering that opening.

One application where such a seal is desirable is between a duct and a substrate, for example where the duct is a hole in a wall or other bulkhead, and the substrate is a feedthrough. A "feedthrough" is a term well known in the art. It typically describes a hollow member which is preinstalled in a hole in the wall or bulkhead to provide a passage for later installation of cables or supply-lines through the wall.

Another application where a seal is required between a duct and a substrate is where the duct is a conduit and the substrate is a cable or supply-line passing through the conduit. In this case the seal between the duct and the substrate is known as a "duct seal".

We refer now, by means of example to one preferred application, that in sealing the space between cable(s) and corresponding cable ducts. In this case there are basically two different situations. One situation is the new installation of cable networks. In this case, a closed seal can be introduced between the cable and cable duct wall at any time. The other situation is that of re-equipping already existing cable networks. In this case, the cables have already been fed into the ducts, so that special sealing means can no longer be drawn over the ends of the cables, that is to say the sealing means must in any case be so constructed that they can be slipped over already installed cables or cable conduit pipes or the like and then inserted into the openings in the cable ducts. This means that all these elements have to be of divided construction which, as a rule, leads to special problems precisely in the case of sealing elements.

It is an object of the present invention to provide a sealing device which is especially suitable for the re-equipment of already existing systems, and which also results in an efficient seal.

The present invention provides a device for sealing an annular space between an elongate opening and an elongate body of smaller cross-section entering that opening, comprising (a) a push-in body, which is provided with a longitudinal slit, for engaging in the opening and for encompassing the body, (b) a divided sealing ring, at its outer peripheral region which engages in the cylindrical opening and (c) a divided expanding ring for expanding the sealing ring.

As a result of the division of the device into the three elements, namely push-in body, sealing ring and expanding ring (which acts on the sealing ring) and the respective, at least single, division or slitting of those elements, the device can be used irrespective of whether it is employed in new installations or for re-equipping existing systems. The device may, for example, be placed over the outer contour of a cable running out of a cable duct. The sealing ring and also the expanding ring can be placed on the elongate body, for example the cable, and then the whole system pushed into the annular gap between the outer surface of the elongate body (for example cable) and the elongate opening (for example duct).

In many applications the elongate opening and or the elongate body, between which a seal is to be made, are cylindrical.

In preferred embodiments, the sealing ring can be pressed into its sealing position from a position externally of the opening, and then the seal effected once inside the opening, thereby allowing easy insertion into the opening. For example, wedge faces may be provided on the expanding ring and then sealing effected by moving an element that acts on those wedge faces. As a result of this, the insertion of the device into the opening can be carried out comparatively easily, since, during installation, the device is not yet subject to any braking action by contact of the sealing ring with the opening wall. Such contact does not occur until there is a deliberate movement of another element, such that the sealing ring is expanded by the expanding ring and thereby brought into its sealing position.

The invention provides various possible arrangements of this common principle. In one construction, the device is characterised in that the expanding ring is arranged parallel to the sealing ring and with one side, preferably a narrow side, acting on the sealing ring on one side, whilst the other side of the sealing ring is supported on a shoulder of the push-in body, the sealing action being applied by axial movement of the push-in body. In this construction, the expanding ring is preferably held in the axial position whilst the push-in body, as a result of its movement, pushes the sealing ring against the expanding ring and then expands the latter.

In the construction of this variant, the invention makes provision for wedge faces which rise outwardly to be provided on the expanding ring on the peripheral face opposite the sealing ring, which wedge faces cooperate with pins on the push-in body in such a manner that, by rotating the push-in body, it can be driven towards the sealing ring.

In order to fix the sealing ring in the interior of the through-bore of the cable duct wall, preferably provision is made for outwardly pointing gripping cramps which are to be applied to the inner surface of the insertion opening to be provided on the expanding ring, it being possible to make provision in a further special construction for the gripping cramps to be formed from an additional divided metal band. In the same manner, the gripping cramps could also consist of plastics material and be, for example, integrally formed on the expanding ring, but the formation of the gripping cramps as a metal band provides for economical and comparatively simple manufacture.

In a second constructional variant of the idea according to the invention, the device is characterised in that the insertion end of the push-in body is equipped with a plurality of axial slots to provide expansion tongues, the sealing ring completely surrounding the expansion tongues on the outside and the expanding ring being arranged in the interior of the push-in body beneath the expansion tongues.

For applying the expanding force, provision is made in this variant for the expanding ring to be equipped at its partition line with wedge faces which are acted on by an expanding element which is provided with coresponding wedge faces and which can be operated from the outside of the opening. By driving in this expanding element, the wedge faces expand the expanding ring, the latter then presses the expansion tongues outwards, as a result of which the sealing ring in turn comes to rest against the inner surface of the insertion opening.

The invention also provides for the push-in body to be equipped with a stop shoulder which can abut the face of the opening and with a support pipe for a shrinkable sleeve or the like, which support pipe projects outwardly beyond that stop shoulder. The shrinkable material is preferably wrapped in sealing manner over the support pipe and can be shrunk onto the elongate body, for example the cable or cable conduit entering the opening. Preferably the shrinkable sleeve in heat shrinkable. Preferably a hot-melt adhesive coating is additionally provided between the sleeve and the elongate body, for example as an internal coating on the sleeve.

In an especially advantageous construction, the invention provides, irrespective of its construction otherwise, for the sealing ring to consist of a layered material having an inner layer of rubber-like materials towards the push-in body and an outer plastically deformable material.

As a result of this construction of the sealing ring, the plastically deformable outer material can squeeze into all the crevices and irregularities, that is to say also the divided arrangement of the sealing ring and the associated gap is filled by this material upon expansion. At the same time, upon insertion, that is to say at least in the mounting of the device, the sealing ring remains in its predetermined place on the push-in body and the rubber-like material provides here for sufficient adhesion of the sealing ring to the elongate body.

Another embodiment of device is now described which, inter alia, is preferred in applications where a torsional movement when squeezing the elastic seal and/or the expansion by way of a wedge face from the inside towards the outside is/are to be avoided. At the same time, however, the advantages of the previous described embodiments are maintained, that is to say the sealing device of the type concerned herein makes it possible precisely and especially to re-equip already existing systems while achieving an especially high sealing action.

This object is achieved as a result of the expanding element being constructed as a pressure ring consisting of several segments which is axially displaceable on the outer surface of the device and has an end pressure face which is applied to the sealing ring, and an operable, opposite end driving face.

Using the construction according to this embodiment it is possible to exert the pressing action on the elastic seal by means of a pressure ring which is arranged to be axially displaceable on the outer surface of the segments, which greatly simplifies sealing.

It may be advantageous for the pressure ring itself to be provided with gripping cramps, or its elements, since this prevents unintentional yielding of the pressure ring or the device against the force of the elastic sealing ring. It is particularly advantageous here that the gripping cramps can be arranged in such a manner that their action does not come into effect in the wall opening at first, such that this action commences only when the pressure ring has made contact with the elastic sealing ring and then further deforms or squeezes the latter.

Provision is also made for the forward, free end (which engages in the opening) to be provided with an outwardly widening circumferential wedge slope on which there is guided a corresponding wedge slope of an expanding ring, the elastic seal being arranged between the pressure face of the pressure ring and the expanding ring. This construction has the advantage that, by squeezing the sealing ring, the expanding ring is initially pressed forwards onto the outwardly pointing slope and therewith expands to rest against the inner surface of the through-bores in order in this manner to prevent the elastic sealing composition from flowing forwards out of the annular space over the device. At the same time, this also results in an additional clamping action.

In preferred constructions, provision is made for the elastic sealing ring to be provided on the side thereof towards the pressure face with a partial enclosure which prevents the ingress of the sealing ring composition under the pressure ring segments.

It has been found that the partial enclosure of the elastic sealing ring in the contact region with the pressure ring renders easy handling of the two elements possible since the pressure ring does not immediately come into contact with the elastic sealing material, which would necessarily increase the friction with respect to other elements but which is prevented by simple means as a result of this measure of the invention.

The embodiment preferably also allows for the elements of the device to be provided on their outwardly facing region with retaining grips for a shrinkable foil or a shrinkable tube which is to be placed thereover. The retaining grips may be retaining clips that are fastened separately thereon, for example by gluing, or may be metal clasps, plastic barbs or also an adhesive strip or the like. It may also be advantageous for the circumferential surface of the parts of the device remote from the engagement end in the opening to be provided with a friction-increasing corrugation or the like.

In principle, the device may consist of a plurality of elements, which can be combined to form the desired whole, preferably cylindrical device. However, it is especially advantageous if the device consists of two half shells, which, for example as in the previous embodiments, are slit once and provided with an impermeable hinge; it may, however, also consist of two half shells which are provided with outwardly facing peripheral clamping beads which are gripped in pairs by a substantially C-shaped holding rail, as is also provided according to the present invention.

In such a solution, however, sealing in the longitudinal direction is essential. In order to obtain optimum sealing, the invention provides for a longitudinally extending seal to be provided in the holding and clamping beads, the invention additionally providing in further construction for there to be provided at least in the region of the forward elastic sealing ring entry openings for the entry of the elastic sealing composition into the plane of the join of the half shells and/or, in the region remote from the forward region, entry openings for the entry of hot-melt adhesive of the shrinkable sleeve into the plane of the join of the half shells.

All of the above-mentioned measures ensure especially good sealing of the elements with respect to one another and a good seal with respect to the duct walls in which the devices are installed. The seal with respect to the cable jackets themselves is made possible in customary manner by shrinkable tubes and/or by clamping/sealing screw connections, that is to say by further mechanical means which are not immediately relevant here.

Embodiments of the invention are now described, by way of example, with reference to the accompanying drawings, in which:

Figure 1 shows the device according to a first exemplary embodiment of the invention in an installation position,

Figure 2 shows the device shown in Figure 1 in the final mounted position,

Figure 3, upper half, shows a modified exemplary embodiment of the invention in the pre-mounted state,

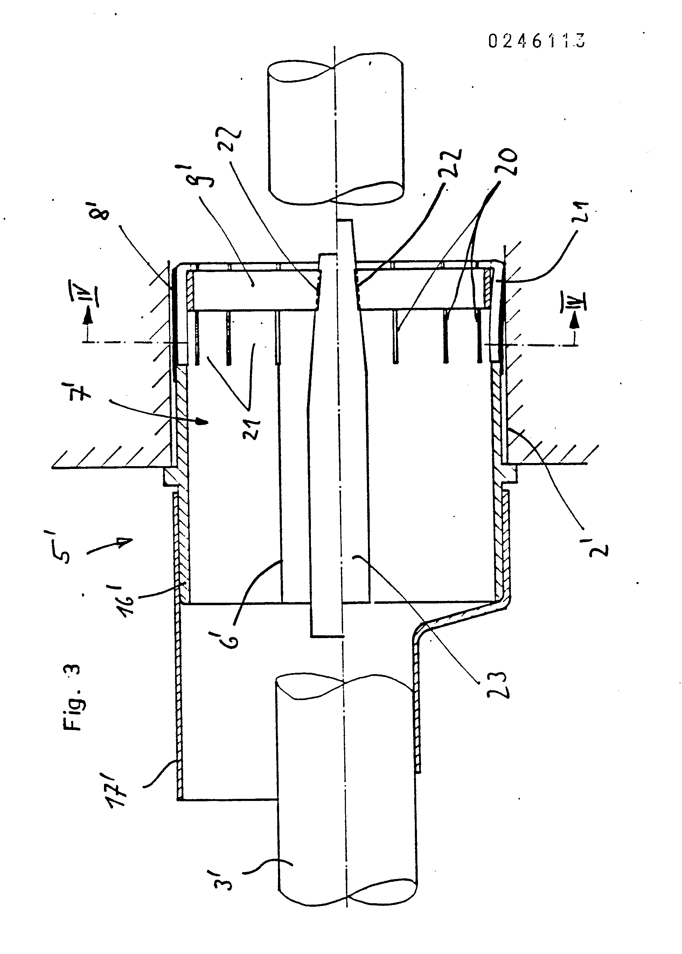

Figure 3, lower half, shows the same device in the final mounted position,

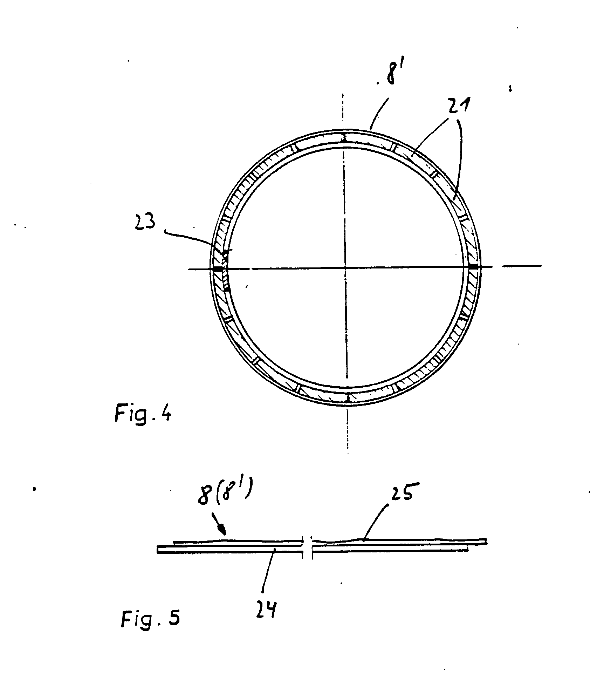

Figure 4 shows a section along the line IV-IV in Figure 3, and

Figure 5 shows the sealing ring unrolled in order to illustrate its two-layered arrangement.

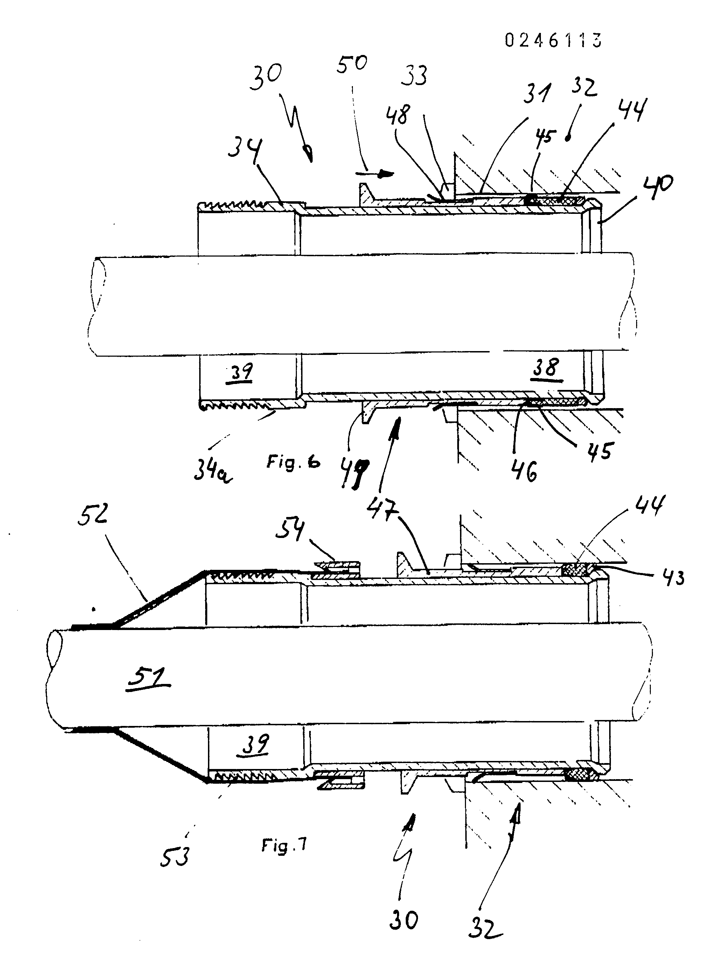

Figure 6 shows a further embodiment according to the invention in section in the mounting position,

Figure 7 shows the embodiment of Figure 6 in the sealing final position,

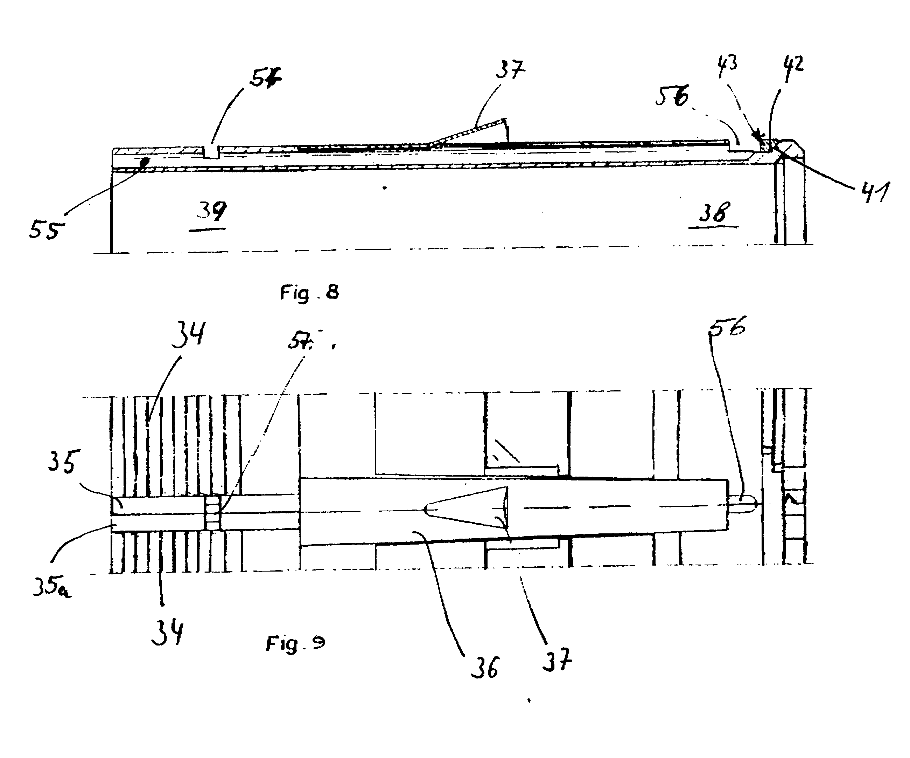

Figure 8 shows a longitudinal section through a region of the embodiment of Figures 6 and 7,

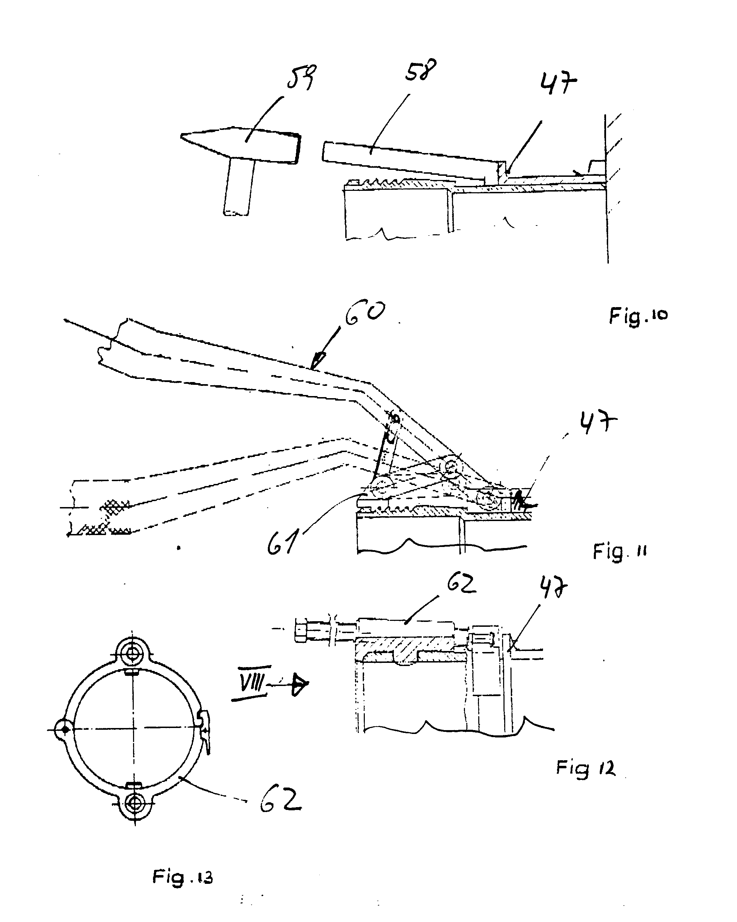

Figure 9 shows a plan view of the device according to arrow IV in Figure 8,

Figs. 10, 11 and 12 show simplified views of driving means for the pressure ring of the embodiment of Figures 6-9, and

Figure 13 shows a plan view, according to arrow VIII in Figure 12, of the driving means shown therein.

In a duct wall 1, a cylindrical opening 2 is made through which a cable 3 passes. In order to seal the cylindrical annular space 4 the device generally designated 5 has been placed around the cable 3.

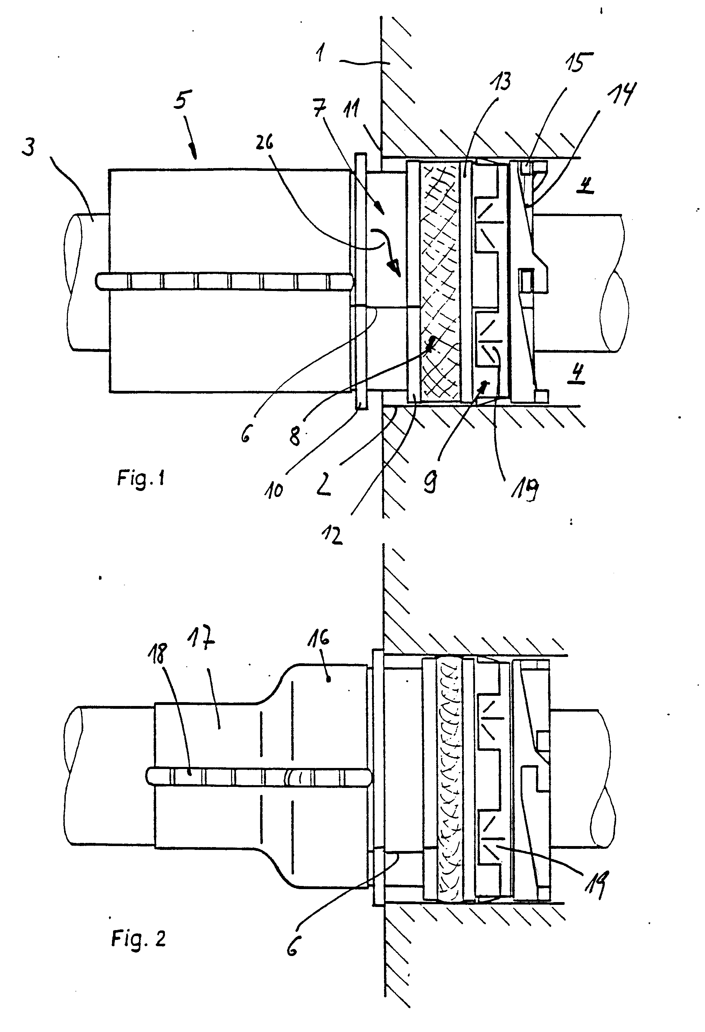

In the exemplary embodiment shown in Figures 1 and 2, this device 5 consists of a push-in body 7 which is provided with a longitudinal slit, and of a divided sealing ring 8 and a likewise divided expanding ring 9 (which is not shown in detail).

The push-in body 7 has a first stop shoulder 10 to be applied to the face 11 of the cylindrical opening 2 and a second shoulder 12 against which a face of the sealing ring 8 rests. At the side opposite this cylindrical shoulder 12 the sealing ring 8 rests against a circumferential shoulder 13 on the expanding ring 9.

The expanding ring 9 is equipped, on the side thereof opposite this shoulder 13, with outwardly rising wedge faces 14 which cooperate with projections 15 on the push-in body 7 in such a manner that rotation (arrow 26 in Fig. 1) of the push-in body 7 drives it to the right in Figure 1 into the interior of the opening 2 because the expanding ring 9 is additionally equipped with outwardly pointing gripping cramps 19 which hook into the inner bore and remain fixed in position. The sealing ring 8 is thus compressed between the shoulders 12 and 13 and bulges outwards and finally reaches the sealing end-position illustrated in Figure 2, whilst, at the same time, the shoulder 10 has come to rest against the face 11 of the entry bore 2.

It may be mentioned at this point that the gripping cramps 19 may be provided in the form of a separate metal band or may be formed integrally on the expanding ring 9. The push-in body 7 otherwise has an outwardly projecting support pipe 16 over which a shrinkable sleeve 17 may lie. A clamping strip 18 lies over the partition line. After shrinking, the situation shown in Figure 2 is obtained As a rule, the shrinkable sleeve 17 is provided on its interior surface with a hot-melt adhesive so that a sealing contact is obtained between the support pipe 16 and the jacket surface of the cable 3.

In the exemplary embodiment shown in Figure 3, functionally identical parts are shown with identical reference numerals except, that is, for a single dash. The device designated 5' therein consists of the push-in body 7', which is likewise equipped with a partition line 6', and of a divided expanding ring 9' lying on the inside and a sealing ring 8' lying on the outside.

In contrast to the exemplary embodiment shown in Figures 1 and 2, the push-in body 7' here has a plurality of axial slots 20 in such a manner that expansion tongues 21 are formed under which the expanding ring 9' lies in the position of use. This expanding ring 9' is provided with wedge faces 22 at its partition line into which an expanding element 23 having coresponding wedge faces engages, the wedge element 23 protruding outwardly beyong the contour of the push-in body 7 in the mounting position, as shown in the upper half of Figure 3. If that expanding element 23 is moved to the right in Figure 3, it expands the expanding ring 9' and thereby also squeezes the clamping tongues 21 outwards in the manner shown on the right in the lower half of Figure 3. Consequently, the sealing ring 8' resting on the outside and completely covering the axial slots 20 is deformed and a sealing contact against the inner wall of the bore 2' is obtained. The expanded free ends of the expansion tongues 21 can be constructed at least partly as gripping cramps oriented in a direction opposite to the withdrawal direction, this not being shown.

As shown in Figure 5, the sealing ring 8 or 8' is constructed as a multi-layered body with a rubber-like material on the side towards the push-in body, which layer is designated 24 in Figure 5, and with an outer layer 25 of a plastic material in order to be able to compensate for any irregularities in the inner bore 2 or 2'.

Another embodiment of device according to the invention is shown in Figures 6 - 13. It is shown in the pre-mounting position in Figure 6. The device 30, generally designated has been inserted to the desired extent into the wall opening 31 of a duct wall 32. For this purpose, stops 33 distributed about the circumference can be provided on elements of the device 30, which, for example in Figures 1 and 2, are shown offset, that is to say they are not actually located in the positions shown but are offset thereto by a certain arc distance.

The drawings are intended to show that the device 30 consists of two half shells 34 and 34a which are joined to each other by way of clamping beads 35 and 35a (Figure 9) arranged in pairs, as a result of being gripped by a clamping rail 36 of substantially C-shaped cross-section which is able to rest, for example with a projection 37, similarly to the stops 33, on the face of the duct wall, without the invention being limited hereto. The C-shaped clamping rail 36 can be tapered to grip in the opposite direction in a similar manner, the projections 37 then being able to serve as means for a hammering tool, such as, for example, a hammer or the like.

As shown, the half shells 34 and 34a are provided oin the part thereof engaging in the opening, (the outwardly projecting free part at the opposite end to part 38 is designated 39) with a circumferential outwardly pointing annular bead 40 which is equipped with a wedge slope 41 (Figure 8) rising from the inside towards the outside against which there rests an oppositely profiled wedge face 42 of an expanding ring 43.

The expanding ring 43 limits the degree of extension of an elastic seal designated 44 which is fitted onto the half shells 34 and 34a. The side of the elastic seal 44 remote from the expanding ring 43 is provided with a partial enclosure 45. Against this partial enclosure 45 there rests an end pressure face 46 of a pressure ring generally designated 47 which is similarly of divided construction and is guided so as to be axially displaceable on the outer surface of the device half shells 34 and 34a.

This pressure ring 47 has approximately in the middle thereof gripping cramps 48 and drive faces 49 opposite the end pressure face 46, against which driving tools are able to act as is described hereinafter.

As will be seen from Figures 6 and 7, by driving in the pressure ring 47 according to arrow 50 in Figure 6, a force can be exerted on the elastic sealing ring 44 in such a manner that the latter becomes compressed and distributes itself against the entire circumference, as shown in Figure 7. At the same time, the end expanding ring 43 prevents the sealing composition from coming out over the bead 40 whilst the partial enclosure 45 to a large extent prevents the sealing composition from flowing out under the pressure ring 47.

One possible method of sealing the firmly mounted device 30, shown in Figure 7, in the duct wall 32 with respect to a cable 51 or a cable conduit pipe or some other element passing through it is, as is known, to use a shrinkable plastics material.

In order to prevent the shrinkable sleeve 52 from sliding off the end 39 of the device 30 a device part 53 provided with a friction-increasing surface or clips 54 distributed about the circumference as indicated in Figure 7 can be provided. The shrinkable sleeve 52 is clipped into the latter and subsequently heated. Held by the clips, it is unable to slide off the end 39 of the device 30.

In order to render possible longitudinal sealing in the plane of the join of the half shells 34 and 34a, sealing threads 55 (Figure 8) which are drawn in longitudinally may be provided. It is especially advantageous, however, if recesses 56 which point from the outside towards the inside are provided in the device precisely in this region in the part 38 engaging in the duct wall 32 and/or corresponding recesses 57 in the forward end 39 of the device. By means of these openings it is possible for the elastic sealing composition in the forward region 38 to enter through the recesses 56 into the plane of the join to from a seal, whilst in the forward region 39 hot-melt adhesive of ths shrinkable tube sleeve 52 can flow in through the openings 57 to form a seal.

Figures 10 to 13 show possible tools for operating the pressure ring 47. Thus, in Figure 10 a chisel 58 for a hammer 59, in Figure 11, an articulated lever driver 60 which is supported with a counter-bearing 61, for example in the corrugations in the region 39 of the device 30, or a spindle driver 62 in ring from as shown in Figures 12 and 13.

The described exemplary embodiments of the invention can, of course, still be modified in various respects without departing from the basic idea. In particular, the invention is not limited to the cross-sectional shapes shown of the device. By virtue of the divided arrangement and the shaping with an expanding ring, it is also possible to provide here, in particular, an oval cross-sectional shape, a box form, a square, a rectangular form and so on; it is also possible for several cable entries to be sealed in this matter insofar as the extension pipes on the device permit a multiple cable entry.

## Claims

1. A device (5, 5',30) for sealing an annular space between an elongate opening (2) and an elonage body (3) of smaller cross-section entering that opening, comprising (a) a push-in body (7,7',34), which is provided with a longitudinal slit, for engaging in the opening (2) and for encompassing the body (3), (b) a divided sealing ring (8, 8',44) at its outer peripheral region which engages in the cylindrical opening (2) and (c) a divided expanding ring (9,47) for expanding the sealing ring (8,8′,44).

2. Device according to claim 1, characterised in that the expanding ring (9,9′) comprises wedge faces (14,22), and the sealing ring (8,8′) can be pressed into its sealing position by moving an element (15,23) so that it acts on the said wedge faces (14,22)

3. Device according to claim 1 or 2 characterised in that the expanding ring (9) is arranged parallel to the sealing ring (8), and that one side of the sealing ring (8) is acted on by one side of the expanding ring (9), whilst the other side of the sealing ring (8) is supported on a shoulder (12) of the push-in body (7), the sealing action being applied by axial movement of the push-in body (7).

4. Device according to claim 3, characterised in that wedge faces (14) which rise outwardly are arranged on the expanding ring (9) on the end face opposite the sealing ring (8), which wedge faces cooperate with pins (15) on the push-in body (7) in such a manner that, by rotating the push-in body (7), it can be driven towards the sealing ring (8).

5. Device according to any one of the preceding claims, characterised in that the expanding ring 9 comprises outwardly pointing gripping cramps (19) for application to the inner surface of the opening (2).

6. Device (5′) according to claim 1 or claim 5 when dependant on claim 1 or 2, characterised in that the insertion end of the push-in body (5′) is equipped with a plurality of axial slots (20) to provide expansion tongues (21), the sealing ring (8′) completely surrounding the expansion tongues (21) on the outside and the expanding ring (9′) being arranged in the interior of the push-in body (5′) beneath the expansion tongues.

7. Device according to claim 6, characterised in that the expanding ring (9′) is equipped with wedge faces (22) at its partition line, which are acted on by an expanding element (23) which is provided with corresponding wedge faces and which can be operated from the outside of the opening.

8. Device according to any preceding claim, characterised in that the push-in body (7) is equipped with a stop shoulder (10) which can abut the face (11) of the opening (2) and with a support pipe (16) which projects outwardly beyond the stop shoulder onto which a shrinkable sleeve can be applied for sealing to the said elongate body (3).

9. Device according to any preceding claim, characterised in that the sealing ring (8,8⊚) consists of a layered material having an inner layer (24) of rubber-like material towards the push-in body (7), and an outer plastically deformable material (25).

10. Device (30) according to claim 1, characterised in that the expanding element is in the form of a pressure ring (47) consisting of several segments, which pressure ring is axially displaceable on the outer surface of the device (3) and has an end pressure-face (46) which can be applied to the sealing ring (44), and an operable, opposite end driving face (49).

11. Device according to claim 1 characterised in that the segments of the pressure ring (47) are provided with gripping cramps (48).

12. Device (30) according to claim 10 or 11, characterised in that the forward, free end (40) of the device 30 engages in the opening is provided with an outwardly widening circumferential wedge slope (41) on which there is guided a corresponding wedge slope (42) of an expanding ring (43), the elastic seal (44) being arranged between the pressure face (46) of the pressure ring (47) and the expanding ring (43).

13. Device according to any one of claims 10 to 12, characterised in that the elastic sealing ring (44) is provided on the side thereof towards the pressure face with a partial enclosure (45) which prevents the ingress of the sealing ring composition under the forces of the pressure ring segments.

14. Device according to one of the preceding claims, characterised in that the device (1) consists of two half shells (34, 34a) which are provided with outwardly facing peripheral clamping beads (35, 35a) which are gripped in pairs by a substantially C-shaped holding rail (36).

0246113

Fig. 1

Fig. 2

Fig. 3

Fig. 3 (labels): 5', 16', 17', 7', 8', 9', 22, 3', 6', 21, 23, 20, 22, 1', 2', 11, III, IV

Fig. 4

Fig. 5

0246113

0246113

Fig. 6

Fig. 7

Fig. 8

Fig. 9

0246113

0246113

Fig. 10

Fig. 11

Fig 12

Fig. 13